Europäisches Patentamt

European Patent Office

Office européen des brevets

(11) Publication number: **0 075 222**
**A1**

## (12) EUROPEAN PATENT APPLICATION

(21) Application number: **82108378.9**

(22) Date of filing: **10.09.82**

(51) Int. Cl.³: **G 01 N 21/27, H 03 K 13/02**

(30) Priority: **17.09.81 JP 148413/81**

(43) Date of publication of application: **30.03.83**
**Bulletin 83/13**

(84) Designated Contracting States: **DE FR GB**

(71) Applicant: **HORIBA, LTD., 2 Miyanohigashi-machi Kissyoin, Minami-ku Kyoto (JP)**

(72) Inventor: **Tanaka, Masaru, 13 Go, 9 Ban, 1 Chome Shimosakamoto, Ohtsu-city Siga-ken (JP)**

(74) Representative: **Patentanwälte TER MEER - MÜLLER - STEINMEISTER, Triftstrasse 4, D-8000 München 22 (DE)**

(54) **Method and compensation circuit for analyzers.**

(57) For compensating the fluctuation of the intensity of a light source or fluctuations caused by unclean windows of the cells in a probe analyzer system, and contrary to the intermittently operating conventional compensation technique, the invention uses at least one multiplying D/A convertor (13) to which the measuring signal is applied and a further D/A convertor (14) also of the multiplying type to which the output signal of a compensating detector (12) is applied to which a monitoring light beam is impinging. A comparator (15) compares the output voltage ($V_o$) of said further D/A convertor (14) with a standard voltage ($E_s$) and the output of the comparator (15) defines the counting direction of a clock-pulse controlled up/down counter (16). According to the invention, the parallel input bits of the further D/A convertor (14) are automatically adjusted to the momentaneous counter balance value of the up-down counter (16) such that the output voltage of said further D/A convertor (14) becomes equal to said standard voltage ($E_s$). Simultaneously, the parallel input bits of the first-mentioned D/A convertor (13) connected with said measuring detector (11) are also automatically adjusted to the same bit number of the further D/A convertor (14).

The primary advantage of the invention is a fast responding and long term correct compensation of the above-mentioned fluctuation in spite of a possible decrease of the intensity of the light source or stains on the walls of the cells of a gas probe analyzer.

# TER MEER-MÜLLER-STEINMEISTER

## PATENTANWÄLTE — EUROPEAN PATENT ATTORNEYS

Dipl.-Chem. Dr. N. ter Meer  
Dipl.-Ing. F. E. Müller  
Triftstrasse 4,  
D-8000 MÜNCHEN 22

Dipl.-Ing. H. Steinmeister  
Artur-Ladebeck-Strasse 51  
D-4800 BIELEFELD 1

HO-85  
Mü/vL

10. September 1982

HORIBA, LTD.

2, Miyanohigashi-machi, Kissyoin,

Minami-ku, Kyoto, Japan

---

## Method and Compensation Circuit for Analyzers

---

Priority Claim:  September 17, 1981, Japan, Ser.No. 56-148413

### DESCRIPTION OF THE INVENTION

The present invention relates to a method and a compensation circuit for compensating the fluctuations of the intensity of a light source or caused by stains on the windows of cells in analyzers.

Analyzers to which the invention pertains are based on measuring methods utilizing a coefficient of absorption, a coefficient of scattering or the like of light incident upon an object to be measured as measuring data, e.g. a light absorption method, a light scattering method and the like. According to such measuring methods, since fluctuations of a light source cause fluctuations of the measuring data, it is necessary to observe the quantity of light on the light source side, and to provide for corrections of such fluctuations.

Horiba, Ltd. — HO-85

0075222

- 2 -

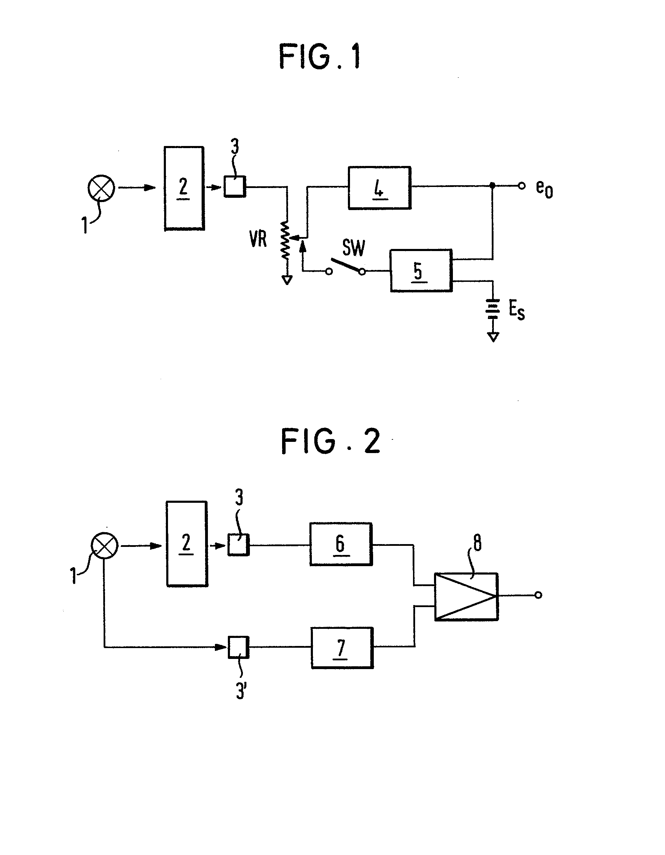

A circuit arrangement as shown in Fig. 1 cr Fig. 2 has been used for compensating the flucuations of the intensity of a light source in analyzers of the mentioned type. Fig. 1 shows a circuit in which a compensating resistance VR can be adjusted by an AGC circuit 5 (AGC = Automatic Gain Control) while a light passing through an object 2 to be measured from a light source 1 is detected by a detector 3 and the resulting signal is amplified by an amplifier 4 via said compensating resistance VR. According to this circuit, a specific operation is necessary to adjust said resistance VR through said AGC circuit 5 by switching on a switch SW so that an output $e_o$ may be equal to a standard voltage $E_s$ after removing said object 2 to be measured in order to compensate the flucuations of the intensity of a light source. Accordingly, it is impossible to carry out the measurements during this operation. That is to say, this circuit has the disadvantage that the measurements can only be carried out intermittently and fast fluctuations of the intensity of a light source can not be followed up sufficiently by said compensating operations.

On the other hand, Fig. 2 shows a circuit in which a measured signal detected by a dteector 3 is supplied to a logarithmic amplifier 6. A monitor signal of a light source 1 detected by a detector 3' is supplied to a logarithmic amplifier 7 and the differences between the output signals of said both amplifiers 6, 7 is evaluated by means of a differential amplifier 8 such that the fluctuations of a light source are compensated. Although continuous measurements are possible because the compensating operations can be carried out also during measurements, this circuit still has the disadvantages that the errors are increased with a decrease of the intensity of a light source and thereby an adequate compensation of the fluctu-

- 3 -

ations of the intensity of a light source is impossible, and the dynamic range (the ratio of the maximum value of signal levels which can be treated by an amplifier to their minimum value) is decreasing because basically the division operation is carried out for analogue values.

Although the above description relates to the compensation of the fluctuations of the intensity of a light source, a similar compensating manner as the above described is used with the same disadvantages as above in order to compensate satins on the windows of the cells of such an analyzer.

It is an object of the present invention to provide a compensation circuit which can compensate correctly the fluctuations of the intensity of a light source and stains on the walls of cells without increasing the errors in spite of a possible decrease of the intensity of a light source or heavy stains on the walls of the cells.

The invention and preferred embodiments thereof are explained in further details with reference to the accompanying drawings.

Figs. 1, 2    show the conventional compensation circuits explained above;

Fig. 3        shows one preferred embodiment of a compensation circuit according to the present invention; and

Figs. 4 and 5  show an example for multiplication type D/A converter and its advantageous use with the invention.

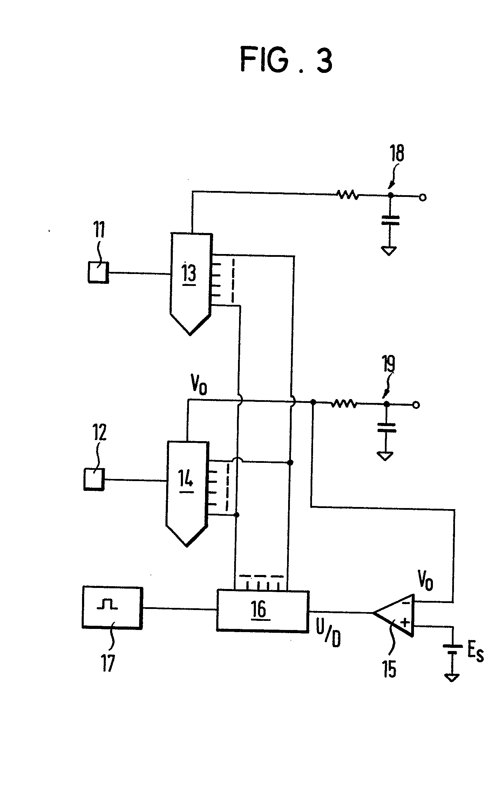

In Fig. 3, a light beam passing through an object to be measured impinges on a measuring detector 11, and a monitor light beam is guided to impinge on a compensating detector 12 from a light source (not shown) in case of compensating the fluctuations of the intensity of a light source. On the

– 4 –

other hand, two light beams having different wave length are made passing through a cell to impinge on said detector 11 and on said detector 12 separately in case of compensating any stains on the walls of a cell. 13 designates a D/A convertor of the multiplying type, to which an output signal of said measuring detector 11 is applied and 14 designates a D/A convertor of the multiplying type, to which an output signal of said compensating detector 12 is applied. 15 designates a comparator for comparing the output voltage $V_0$ of said D/A convertor 14 of the compensating detector side with the standard voltage $E_s$. An up-and-down-counter 16 is switched to an up-count operation when $E_s$ is larger than $V_0$ or a down-count operation when $E_s$ is smaller than $V_0$ in dependence upon the comparison outputs of said comparator 15. A clock pulse generator 17 provides the clock pulses for said counter 16.

Said counter 16 up-counts or down counts the clock pulses generated by said clock pulse generator 17 such that the counter balance is changed by the output signals of said comparator 15. These counter balance values or contents of counting are applied to said convertors 13, 14 in parallel, and the bits of said convertor 14 are adjusted automatically so that an output $V_0$ of the convertor 14 of the compensating detector side may be equal to the standard voltage $E_s$ while the bits of the convertor 13 are automatically adjusted to be the same bits as the bits of said convertor 14.

According to this construction, the output voltage $V_0$ of said convertor 14 can be sufficiently followed up by the standard voltage $E_s$ even though the detected output signals of said compensating detector 12 are changed because of the flucuations of the intensity of a light source or stains on the windows of a cell. Simultaneously, also said convertor 13 of the detector side is automatically adjusted in the same manner as the convertor 14. Consequently,

- 5 -

although the detected output signals of said measuring detector 11 are changed owing to the fluctuations of the intensity of a light source or stains on the windows of a cell, these signals are corrected by multiplying with the output bits of said convertor 13 to obtain signals which are compensated in respect to fluctuations of the intensity of a light source and/or stains on the windows of a cell.

Reference numerals 18, 19 designate filters having a cutoff frequency smaller than the frequency band of said clock pulses. In addition, although only one detecting (measuring) detector 11 and only one associated convertor 13 are used with the above described preferred embodiment, alternatively a plurality of said measuring detectors 11 and said convertors 13 may be used. In this case, it is only necessary to provide for additional connections so that the contents of said up-and-down counter 16 may be supplied to said separate and additional convertors in parallel.

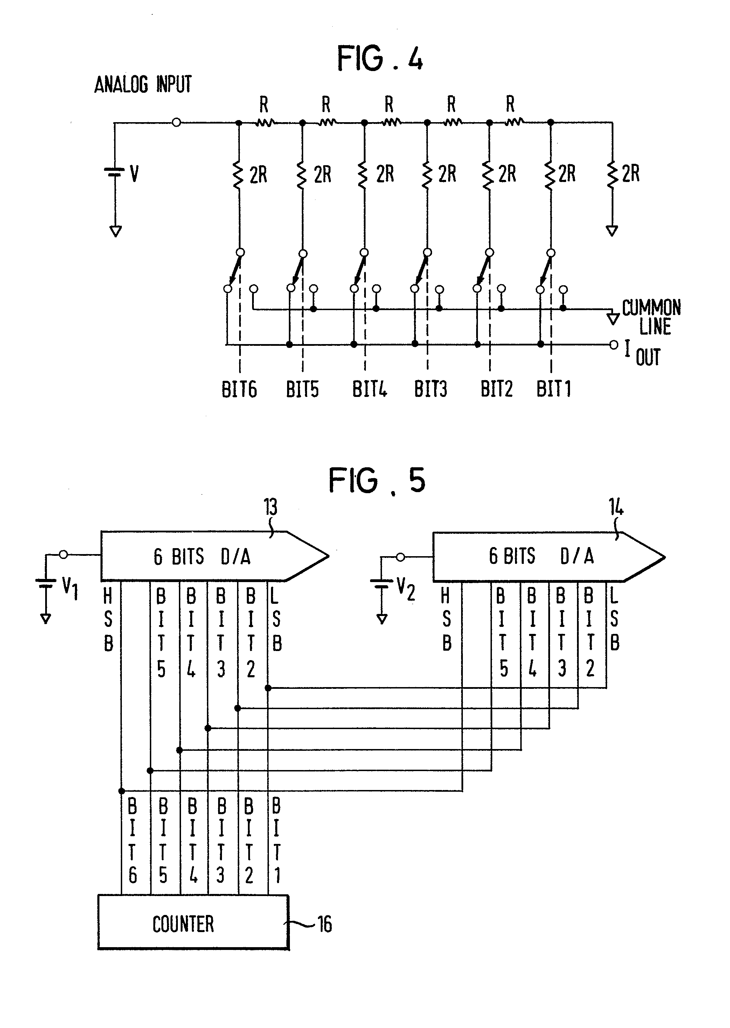

A basic construction of a multiplying D/A convertor to be used with a compensating circuit according to the invention will now be described with reference to Figs. 4 and 5.

Known D/A convertors of this type comprise an analog input and a digital input and deliver an analog output signal having the following output value:

(analog output value) = (analog input value) x (digital input value)

One example of such a multiplication type D/A convertor (resistance ladder type - example of 6 bits) is shown in Fig. 4.

- 6 -

The output signal $I_{out}$ is defined by the following equation if all bits are switched on (Fig. 4):

$$I_{out} = \frac{V}{2R} \left( 1 + \frac{1}{2} + \frac{1}{4} + \frac{1}{8} + \frac{1}{16} + \frac{1}{32} \right).$$

Fig. 5 shows one example how the parallel output bits of counter 16 are simultaneously supplied to the parallel inputs of D/A convertors 13 and 14. The two D/A convertors 13 and 14 of 6 bits capacity each are connected with an output of the counter 16.

A compensation circuit for analyzers according to the present invention has the following effects and advantages:

(a) The compensation of fluctuations of the intensity of a light source and stains on the windows of a cell can be carried out even during a continuous measurement process because a measuring detector and a D/A convertor of the multiplying type are used to which the detected output signals of said measuring detector are applied as usual, and in addition an automatic adjustment of the bits of said D/A convertor of multiplying type is achieved by means of a circuit consisting of a compensating detector, another D/A convertor, a comparator and an up-and-down counter.

(b) The decrease of the intensity of a light source and even heavy stains on the windows of a cell do not lead to an increase of errors and the like. A highly accurate compensation is always possible because the bits of a D/A convertor of the multiplying type to which the detected output signals of a compensating detector are fed are automatically adjusted such that the output voltage of said D/A convertor of the multiplying type becomes equal to the standard voltage and simultaneously the bits of the D/A convertor of multiplying type of the measuring detec-

- 7 -

tor side are automatically adjusted to be the same bits as the bits of the D/A convertor of multiplying type of the compensating detector side. The advantageous compensation method according to the invention is achieved without adopting the conventional manner in which the light to be measured is divided or sequentially interrupted by a monitor light beam in spite of a circuit which can compensate during measurements.

- 8 -

CLAIMS:

1. A compensation circuit for analyzers,
c h a r a c t e r i z e d   by
- one or a plurality of first D/A convertors (13) of the
multiplying type having an input to which the detected output signal of a measuring detector (11)
is applied,
- a second D/A convertor (14) of the multiplying type
having an input to which the detected output signal
of a compensating detector (12) is applied,
- a comparator (15) for comparing an output voltage
($V_0$) of said second D/A convertor (14) associated
with said compensating detector (12) with a standard
voltage ($E_s$),
- an up-and-down-counter (16) which is switched to an
up-counting operation or a down-counting operation
in dependence upon an output of said comparator (15),
and
- a clock pulse generator (17) for providing said
counter (16) with clock pulses, and further characterized in that
- the parallel input bits of said second D/A convertor
(14) connected with said compensating detector (12)
are automatically adjusted to the counter balance
value of said up and down-counter (16) so that an
output voltage of said D/A convertor (14) connected
with said compensating detector (12) becomes equal
to the standard voltage ($E_s$) and simultaneously the
parallel input bits of the other D/A convertor (13)
connected with said measuring detector (11) also are
automatically adjusted to the same bit number of the
second D/A convertor (14).

2.   A method for compensating the fluctuations of the
intensity of a light source or fluctuations caused by
stains on the windows of cells in analyzers like non-
dispersive infrared analyzers or the like,
c h a r a c t e r i z e d   i n   that
- the measuring signals are supplied to a first multiplying digital to analogue convertor (first D/A convertor) having parallel signal input terminals,
- detected signals resulting from a monitor light
source are supplied to a second digital to analogue
convertor (second D/A convertor), with parallel signal
input terminals,
- the output voltage of said second D/A convertor is
compared with a standard voltage,
- the result of the comparating operation is used to
control the direction of counting of clock pulses by an
up- and down-counter,
- the parallel inputs of said second multiplying D/A
convertor are automatically adjusted to the respective and momentaneous counter balance values of
said up- and down-counter such that the output voltage of said second D/A convertor becomes equal
to said standard voltage, and
- simultaneously the parallel inputs of said first
multiplying D/A-convertor supplied with said measuring
signal are also automatically adjusted to the same
bit number of said second D/A convertor at the output
of which the fluctuation-compensated measuring signal
is derived.

No. 82 103 178.9
MORIBA, LTD.
HO-85
0075222

# FIG. 1

# FIG. 2

# FIG . 3

# FIG . 4

ANALOG INPUT

V

BIT6  BIT5  BIT4  BIT3  BIT2  BIT1

CUMMON LINE

I OUT

# FIG . 5

13

6 BITS  D/A

V₁

14

6 BITS  D/A

V₂

COUNTER  16

## DOCUMENTS CONSIDERED TO BE RELEVANT

| Category | Citation of document with indication, where appropriate, of relevant passages | Relevant to claim |
|---|---|---|
| P,Y | "Soviet Inventions Illustrated" Week E 13, 12 May 1982 Section S 03 | 1,2 |
| Y | & SU – A – 840678 | |
| | –– | |
| Y | Patent Abstracts of Japan Vol. 4, No. 43, 4 April 1980 page 99P5 & JP – A – 55 – 15073 | 1,2 |
| | –– | |
| Y | DE – A – 2 321 735 (MICROMEDIC SYSTEMS) * claims 1, 3; page 4, line 4 to page 6, line 3; page 13, last paragraph to page 17, line 19; fig. 3, 4 * & US – A – 3 922 091 | 1,2 |
| | –– | |
| A | DE – A1 – 2 638 333 (BOEHRINGER MANNHEIM GMBH) * claim 1; page 8, line 28 to page 9, line 27; fig. * & US – A – 4 128 339 | 1,2 |
| | –– | |
| A | DE – A1 – 2 834 642 (R. BOSCH GMBH) * claims 1, 3, 5; fig. 1 * | 1,2 |
| | –– | |
| A | DE – B – 2 220 230 (LABTRONIC AG) * claim 1; column 4, line 11 to column 6, line 2; fig. 1 * & US – A – 3 879 135 | 1,2 |

**CLASSIFICATION OF THE APPLICATION (Int. Cl. 3)**

G 01 N 21/27

H 03 K 13/02

**TECHNICAL FIELDS SEARCHED (Int.Cl. 3)**

G 01 J 1/16

G 01 N 21/00

G 01 N 33/00

G 05 B 1/00

G 05 B 13/02

G 05 D 25/02

H 03 K 13/02

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

| | | |
|---|---|---|
| X | The present search report has been drawn up for all claims | |

| Place of search | Date of completion of the search | Examiner |
|---|---|---|
| Berlin | 26-10-1982 | HOFMANN |